(19) Europäisches Patentamt
European Patent Office
Office européen des brevets

(11) Veröffentlichungsnummer : **0 201 830**
**B1**

(12) # EUROPÄISCHE PATENTSCHRIFT

(45) Veröffentlichungstag der Patentschrift : **28.09.88**

(51) Int. Cl.[4] : **C 08 G 79/04**, C 08 G 63/68, C 08 G 81/00

(21) Anmeldenummer : **86106116.6**

(22) Anmeldetag : **05.05.86**

(54) **Verfahren zur Herstellung von Copolyphosphonaten mit hoher Kerbschlagzähigkeit.**

(30) Priorität : **14.05.85 DE 3517271**

(43) Veröffentlichungstag der Anmeldung : **20.11.86 Patentblatt 86/47**

(45) Bekanntmachung des Hinweises auf die Patenterteilung : **28.09.88 Patentblatt 88/39**

(84) Benannte Vertragsstaaten :
**DE FR GB IT**

(56) Entgegenhaltungen :
**EP-A- 0 021 213**
**EP-A- 0 034 697**
**EP-A- 0 103 231**

(73) Patentinhaber : **BAYER AG**
**Konzernverwaltung RP Patentabteilung**
**D-5090 Leverkusen 1 Bayerwerk (DE)**

(72) Erfinder : **Kauth, Hermann, Dr.**
**Kolpingstrasse 34**
**D-4150 Krefeld 11 (DE)**
Erfinder : **Reinking, Klaus, Dr.**
**Robert-Stolz-Strasse 16 b**
**D-5632 Wermelskirchen 1 (DE)**
Erfinder : **Freitag, Dieter, Dr.**
**Hasenheide 10**
**D-4150 Krefeld 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft ein Verfahren zur Herstellung aromatischer Copolyphosphonate mit verbesserter Kerbschlagzähigkeit durch Eindampfen von Lösungen aromatischer Polyphosphonate und aromatischer Polyester in organischen Lösungsmitteln. Der Begriff « aromatische Polyester » im Sinne der Erfindung schließt aromatische Polycarbonate und folglich auch aromatische Polyestercarbonate sowie Mischungen aromatischer Polyester und aromatischer Polycarbonate ein.

Aromatische Polyesterphosphonate und aromatische Polycarbonatophosphonate sind bekannt (DE-AS-1 199 499, 1 199 500). Sie werden vorwiegend nach dem Phasengrenzflächenverfahren aus Bisphenolat, Phosphonsäure- und Dicarbonsäuredichloriden oder aus Bisphenol-bischlorkohlensäureestern (oder deren Ausgangsprodukten Bisphenol und Phosgen) und Phosphonsäuredichloriden hergestellt. Weil der Einsatz von Phosphonsäuredichloriden im Phasengrenzflächenverfahren leicht Emulsionen entstehen läßt, deren Phasentrennung schwierig oder gar unmöglich ist, hat sich dieses Herstellungsverfahren in der Praxis nicht durchsetzen können.

Polyesterphosphonate und Polycarbonatophosphonate können auch durch Schmelzkondensation aus Bisphenol, Phosphonsäureestern und Carbonsäureestern bzw. aus Bisphenol, Phosphonsäureestern und Diphenylcarbonat hergestellt werden (vgl. z. B. DE-OS-2 925 206, 2 925 208). Sie besitzen eine hohe Wärmeformbeständigkeit, erfüllen aber sehr hohe Anforderungen an die Kerbschlagzähigkeit nicht.

Überraschenderweise wurde gefunden, daß man durch Extrusion von Lösungen aromatischer Polyester und aromatischer Polyphosphonate bei höherer Temperatur Copolyphosphonate erhält, deren Kerbschlagzähigkeiten die der durch Schmelzkondensation hergestellten Copolyphosphonate und oft sogar die beider Ausgangskomponenten übertreffen, wobei die absoluten Werte selbstverständlich in Abhängigkeit von der Anzahl der Ester- und Carbonatgruppen variieren.

Gegenstand der Erfindung ist also ein Verfahren zur Herstellung aromatischer Copolyphosphonate mit mittleren Molekulargewichten $\bar{M}_n$ von 5 000 bis 200 000, vorzugsweise von 10 000 bis 150 000, und molaren Phosphonatgruppen/(Carboxylat- plus Carbonatgruppen)-Verhältnissen von 95 : 5 bis 5 : 95, vorzugsweise 80 : 20 bis 10 : 90, insbesondere 65 : 35 bis 10 : 90, dadurch gekennzeichnet, daß man eine Mischung aus

I. aromatischem Polyester und

II. aromatischem Polyphosphonat im gewünschten Verhältnis und

III. organischem Lösungsmittel in einer Menge von 2 bis 95, vorzugsweise 30 bis 80, insbesondere 60 bis 75 Gew.-%, bezogen auf die Summe der Komponenten I + II + III, bei Temperaturen von 150 bis 420, vorzugsweise von 200 bis 380, insbesondere von 300 bis 380 °C, bis zu einem Umesterungsgrad (bestimmt durch das Verhältnis der Glasübergangstemperatur-Peaks nach Differentialthermoanalyse) von mindestens 80, vorzugsweise mindestens 90, insbesondere mindestens 95, % extrudiert, wobei das Lösungsmittel, gegebenenfalls unter vermindertem Druck, während der Extrusion entfernt wird.

In der Regel wird man so vorgehen, daß man die Reaktionsmischung auf eine Temperatur von 150 bis 260 °C, vorzugsweise von 200 bis 260 °C, erhitzt und die Temperatur unter Erhalten des flüssigen Zustands der Mischung allmählich auf eine Temperatur von 280 bis 420 °C, vorzugsweise von 300 bis 380 °C, steigert.

Die für die Extrusion bestimmte Mischung wird in der Regel durch Mischen verdünnter Lösungen der Komponenten I und II und durch nachfolgende Aufkonzentrierung in einer vorgeschalteten Eindampfstufe hergestellt.

Das erfindungsgemäße Verfahren kann so durchgeführt werden, daß man — kontinuierlich oder stufenweise — die Temperatur steigert und den Druck senkt. Das restliche Lösungsmittel wird vorzugsweise in einer Extruderzone mit Entgasungsstutzen entfernt, im allgemeinen unter vermindertem Druck. Die Verweilzeit in dieser letzten Extruderzone beträgt vorzugsweise 20 bis 350 sec, die Temperatur in dieser Zone vorzugsweise 300 bis 380 °C.

Mit verlängerter Reaktionszeit vermindert sich die kerbschlagzähigkeit, was mindestens teilweise auf Molekulargewichtsabbau zurückzuführen ist ; demzufolge wird man die Reaktion spätestens dann abbrechen, wenn die Umesterung zu 100 % eingetreten ist.

Die Glasübergangstemperatur kann beispielsweise durch Differentialthermoanalyse an aus Lösung gegossenen Filmen bestimmt werden. Ein Hinweis auf eine vollständige Umesterung ist auch die Transparenz des extrudierten Stranges.

Für das erfindungsgemäße Verfahren bevorzugte organische Lösungsmittel III sind beispielsweise Methylenchlorid, Chloroform, Tetrachlorethane, Trichlorethylen, Tetrachlorethylen, Chlorbenzol, Dichlorbenzol, Toluol, Xylol, Anisol oder deren Mischungen.

Aromatische Polyester I umfassen

a) voll-aromatische Polyester,

b) aromatische Polycarbonate,

c) aromatische Polyestercarbonate und

deren Mischungen.

Vollaromatische Polyester (a) im Sinne der Erfindung sind Polyester, enthaltend Iso- und/oder Terephthalsäurereste, halogenfreie Diphenolreste, Reste von Kettenabbrechern und gegebenenfalls von

Verzweigungsmitteln mit relativen Viskositäten von 1,18 bis 2,0, vorzugsweise von 1,2 bis 1,7 (gemessen an einer Lösung von 0,5 g Polyester in 100 ml Dichlormethan-Lösung bei 25 °C). Sie werden z. B. in der Monographie « Polyesters » von V. V. Korshak und S. V. Vinogradova, Pergamon Press, Oxford 1965, S. 494, 485-486, 454-455 beschrieben.

Bevorzugte halogenfreie Diphenole für die Herstellung der vollaromatischen Polyester (a) sind Verbindungen der Formel

$$HO — Z — OH \qquad (I)$$

worin Z einen zweiwertigen ein- oder mehrkernigen aromatischen Rest mit 6-30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel

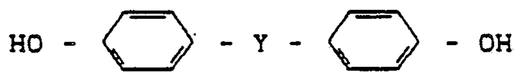

(II)

in der

Y eine Einfachbindung, einen Alkylen- oder Alkylidenrest mit 1-7 C-Atomen, einen Cycloalkylen- oder Cycloalkylidenrest mit 5-12 C-Atomen, —O—, —S—,

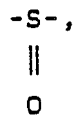

—$SO_2$— oder

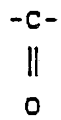

bedeutet,
sowie deren kernalkylierte Derivate z. B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α'-Bis-(hydroxyphenyl)-diisopropylbenzole

sowie deren kernalkylierte Verbindungen, und die Mischungen solcher Diphenole.

Die wichtigsten Diphenole seien nachfolgend aufgezählt :

Bisphenol A, 2,2-Bis-(3-methyl-4-hydroxyphenyl)-propan,
2,2-Bis-(3,5-dimethyl-4-hydroxyphenyl)-propan,
1,1-Bis-(4-hydroxyphenyl)-isobutan,
2,4-Bis-(4-hydroxyphenyl)-2-methylbutan,
1,1-Bis-(4-hydroxyphenyl)-cyclohexan,
4,4'-Dihydroxydiphenylsulfid, 4,4'-Dihydroxydiphenyl,
4,4'-Dihydroxydiphenylsulfon und
α,α'-Bis-(4-hydroxyphenyl)-p-diisopropylbenzol und deren Mischungen.

Bevorzugte vollaromatische Polyester (a) erhalten Iso- und Terephthalsäurereste im Verhältnis 7 : 3 bis 3 : 7, vorzugsweise etwa 1 : 1.

Aromatische Polycarbonate (b) im Sinne der Erfindung sind halogenfreie Homo- und Copolycarbonate auf Basis der Diphenole I bzw. II, Phosgen Kettenabbrechern und gegebenenfalls Verzweigungsmitteln

und mit einem als Gewichtsmittel bestimmten Molekulargewicht $\bar{M}_w$ von 10 000 bis 200 000, vorzugsweise von 20 000 bis 80 000, ermittelt durch Lichtstreuung.

Aromatische Polyestercarbonate (c) im Sinne der Erfindung enthalten Iso- und/oder Terephthalsäurereste, Carbonatgruppen, halogenfreie Reste der Diphenole der allgemeinen Formel (I) bzw. (II), Reste von Kettenabbrechern und gegebenenfalls Verzweigungsmitteln. Diese Polyestercarbonate (c) und ihre Herstellung werden beispielsweise von C. P. Bosnyak et al. in der Zeitschrift « Polymer » 1982, Vol. 23, S. 609-612, « Synthesis and Properties of some Poly(bisphenol A-iso/terephthalate)-copolycarbonates » sowie in der DE-AS-1 495 302, der EP-A-64 153 und in dem US-Patent 4 286 083 beschrieben.

Bevorzugte aromatische Polyestercarbonate (c) besitzen ein als Gewichtsmittel bestimmtes Molekulargewicht $\bar{M}_w$ von 10 000 bis 200 000, vorzugsweise von 20 000 bis 80 000, ermittelt durch Lichtstreuung.

Die nach dem erfindungsgemäßen Verfahren herzustellenden Polyestercarbonatophosphonate enthalten Carboxylat- und Carbonatgruppen, vorzugsweise in einem molaren Verhältnis von 23 : 77 bis 100 : 0.

Aromatische Polyphosphonate II im Sinne der Erfindung sind thermoplastische Verbindungen mit als Zahlenmittel bestimmten Molekulargewichten von 5 000 bis 200 000, vorzugsweise von 6 000 bis 80 000, insbesondere von 8 000 bis 40 000, mit wiederkehrenden Einheiten der Formel

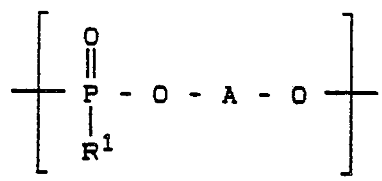

(III)

worin

$R^1$ $C_1$-$C_{12}$-Alkyl, vorzugsweise Methyl, $C_2$-$C_{12}$-Alkenyl, $C_6$-$C_{30}$-Cycloalkyl, Cycloalkenyl, -Aryl (vorzugsweise Phenyl), -Arylalkyl oder -Arylalkenyl, wobei die jeweilige Arylgruppe nicht substituiert oder durch 1-5 $C_1$-$C_4$-Alkylgruppen oder durch 1-5 Halogenatome (F, Cl oder Br) oder durch die genannten Alkylgruppen und Halogenatome substituiert ist, und

A Phenylen 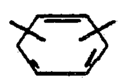

Bisphenylylen 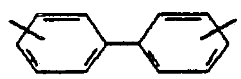

$C_1$-$C_7$-Alkylenbisphenylen 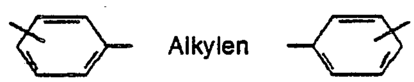


$C_5$-$C_{12}$-Cycloalkylenbisphenylen

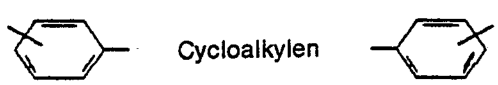


Thiobisphenyl 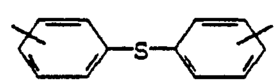

Oxybisphenylen 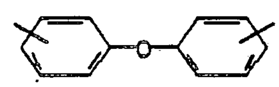

Sulfonylbisphenylen 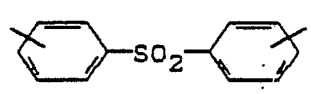

Carbonylbisphenylen 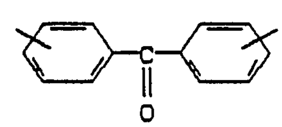

Napthylen 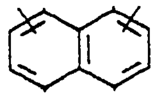

wobei jeder Phenylkern unsubstituiert oder durch 1-4 $C_1$-$C_4$-Alkylgruppen oder durch 1-4 Halogenatome (F, Cl oder Br) oder durch die genannten Alkylgruppen und Halogenatome substituiert und der Naphthylkern unsubstituiert oder durch 1-6 mindestens einer der genannten Gruppen oder Atome substituiert sind, bedeuten.

Die aromatischen Polyphosphonate II können verzweigt sein, wobei vorzugsweise nicht mehr als 3 Mol-%, bezogen auf die Monomereinheit III, Verzweigungsmittel eingesetzt werden.

Geeignete Verzweigungsmittel sind drei- und höherfunktionnelle Verbindungen, die sich in die Polyphosphonate einkondensieren lassen. Ein bevorzugtes Verzweigungsmittel ist Trimesinsäure.

Es ist zu beachten, daß bei Einsatz von (Carboxylatgruppen-freiem) Polycarbonat ab einem molaren Carbonat/-Phosphonat-Verhältnis von 30 : 70 mit steigendem Polycarbonatanteil die Kerbschlagzähigkeit absinkt.

Die erfindungsgemäß hergestellten Copolyphosphonate finden vornehmlich zur Herstellung von Formkörpern Verwendung, die hohe Kerschlagzähigkeit aufweisen sollen, z. B. Steckerleisten, Lampenhalterungen, Schalterkästen.

Die Verarbeitung erfolgt in der Regel durch Spritzguß bei Massetemperaturen von 280 bis 360 °C und bei Formtemperaturen von 80 bis 150 °C, vorzugsweise 90 bis 120 °C.

## Beispiele

Der in den nachfolgenden Beispielen in Form seiner 10 gew.-%igen Lösung in Methylenchlorid/Chlorbenzol (Gewichtsverhältnis 1 : 1) eingesetzte aromatische Polyester « APE » ist ein Polyester aus Bisphenol-A, Iso- und Terephthalsäureresten (Molverhältnis Iso-/Terephthalsäurereste = 1/1) mit p-tert.-Butylphenol-Endgruppen mit einer relativen Lösungsviskosität $\eta_{rel}$ = 1.30, gemessen in 0,5 gew.-%iger Lösung in Methylenchlorid bei 25 °C.

Das in den nachfolgenden Beispielen in Form seiner 10 gew.-%igen Lösung in Methylenchlorid/Chlorbenzol (Gewichtsverhältnis 1 : 1) eingesetzte Polycarbonat « PC » ist ein Polycarbonat aus Bisphenol-A, Phosgen und p-tert. Butylphenol als Kettenabbrecher mit einer relativen Lösungsviskosität $\eta_{rel}$ = 1.28, gemessen in 0,5 gew.-%iger Lösung in Methylenchlorid bei 25 °C.

Die in den nachfolgenden Beispielen in Form ihrer 10 gew.-%igen Lösung in Methylenchlorid/Chlorbenzol (Gewichtsverhältnis 1 : 1) eingesetzten Polyestercarbonate « APE-Z » sind aus Bisphenol-A, Iso- und Terephthalsäure (Molverhältnis 1 : 1) sowie Phosgen aufgebaut und besitzen relative Lösungsviskositäten $\eta_{rel}$ = 1.28-1.30, gemessen in 0,5 gew.-%iger Lösung in Methylenchlorid bei 25 °C. Das « Z » bezeichnet den Anteil an Iso- und Terephthalat-Einheiten im Polyestercarbonat, ausgedrückt in Gew.-%.

Das in den nachfolgenden Beispielen in Form seiner 10 gew.-%igen Lösung in Methylenchlorid/Chlorbenzol (Gewichtsverhältnis 1 : 1) eingesetzte Polyphosphonat « POP » ist auf Basis von Methanphosphonsäure und 4,4'-Dihydroxydiphenyl aufgebaut und besitzt eine relative Lösungsviskosität von $\eta_{rel}$ = 1.23, gemessen in 0,5 gew.-%iger Lösung in Methylenchlorid bei 25 °C.

Die Prüfung der Kerbschlagzähigkeit $a_k$ erfolgte nach Charpy gemäß DIN 53 453.

Die 10 %ige Lösungen von « POP » wurde mit der 10 %igen Lösung von « APE », « APE-Z » bzw. « PC » gemischt, bis zu einem Feststoffgehalt von ca. 30 Gew.-% eingedampft und auf einem Doppelwellen-Ausdampfextruder vom Lösungsmittel befreit. Die Temperatur im Vakuumextruder betrug 340 °C ; die Verweilzeit betrug ca. 250 sec.

Die Normkleinstäbe wurden auf einer Spritzgießmaschine bei einer Massetemperatur von 330 °C und einer Formtemperatur von 95 °C hergestellt.

(Siehe Tabelle Seite 6 f.)

| Beispiel | POP | APE | APE 80 | APE 50 | APE 30 | PC | $\eta_{rel}$ | $a_k$ [kJ/m²] |
|---|---|---|---|---|---|---|---|---|
| 1 | 10 | 90 | | | | | 1.275 | 30 |
| 2 | 30 | 70 | | | | | 1.282 | 31 |
| 3 | 50 | 50 | | | | | 1.265 | 37 |
| 4 | 90 | 10 | | | | | 1.209 | 49.5 |
| 5 | 10 | | 90 | | | | 1.284 | 37 |
| 6 | 20 | | 80 | | | | 1.254 | 33 |
| 7 | 50 | | 50 | | | | 1.286 | 38 |
| 8 | 90 | | 10 | | | | 1.201 | 43 |
| 9 | 20 | | | 80 | | | 1.252 | 35 |
| 10 | 50 | | | 50 | | | 1.240 | 38 |
| 11 | 90 | | | 10 | | | 1.213 | 40 |
| 12 | 10 | | | | 90 | | 1.276 | 48 |
| 13 | 20 | | | | 80 | | 1.260 | 44 |
| 14 | 30 | | | | 70 | | 1.249 | 42 |
| 15 | 50 | | | | 50 | | 1.253 | 52 |
| 16 | 80 | | | | 20 | | 1.242 | 42 |
| 17 | 90 | | | | 10 | | 1.210 | 43 |
| 18 | 70 | | | | | 30 | 1.227 | 35 |
| 19 | 80 | | | | | 20 | 1.215 | 40 |
| 20 | 90 | | | | | 10 | 1.207 | 48 |
| 21 | 100 | | | | | | 1.230 | 32 |
| 22 | | 100 | | | | | 1.301 | 25 |
| 23 | | | 100 | | | | 1.285 | 28 |
| 24 | | | | 100 | | | 1.297 | 32 |
| 25 | | | | | 100 | | 1.294 | 35 |
| 26 | | | | | | 100 | 1.281 | 50 |

Sämtliche hergestellten Produkte waren transparent und wiesen nur eine einzige Glasübergangstemperatur auf.

## Patentansprüche

1. Verfahren zur Herstellung aromatischer Copolyphosphonate mit mittleren Molekulargewichten $\bar{M}_n$ von 5 000 bis 200 000 und molaren Phosphonatgruppen/(Carboxylat- plus Carbonatgruppen)-Verhältnissen von 95 : 5 bis 5 : 95, dadurch gekennzeichnet, daß man eine Mischung aus

I. aromatischem Polyester und

II. aromatischem Polyphosphonat im gewünschten Verhältnis und

III. organischem Lösungsmittel in einer Menge von 2 bis 95 Gew.-%, bezogen auf die Summe der Komponenten I + II + III,

bei Temperaturen von 150 bis 420 °C bis zu einem Umesterungsgrad (bestimmt durch das Verhältnis der Glasübergangstemperatur-Peaks nach Differentialthermoanalyse) von mindestens 80 % extrudiert, wobei das Lösungsmittel, gegebenenfalls unter vermindertem Druck, während der Extrusion entfernt wird.

2. Verfahren nach Anspruch 1, dadurch gekennzeichnet, daß das mittlere Molekulargewicht $\bar{M}_n$ der Copolyphosphonate 10 000 bis 150 000 beträgt.

3. Verfahren nach Ansprüchen 1 und 2, dadurch gekennzeichnet, daß das molare Phosphonatgruppen/(Carboxylat- plus Carbonatgruppen)-Verhältnis 80 : 20 bis 10 : 90 beträgt.

4. Verfahren nach Ansprüchen 1-3, dadurch gekennzeichnet, daß das molare Phosphonatgruppen/(Carboxylat- plus Carbonatgruppen)-Verhältnis 65 : 35 bis 10 : 90 beträgt.

5. Verfahren nach Ansprüchen 1-4, dadurch gekennzeichnet, daß das organische Lösungsmittel III in einer Menge von 30 bis 80 Gew.-%, bezogen auf die Summe der Komponenten I + II + III, eingesetzt wird.

6. Verfahren nach Ansprüchen 1-5, dadurch gekennzeichnet, daß das organische Lösungsmittel III in einer Menge von 60 bis 75 Gew.-%, bezogen auf die Summe der Komponenten I + II + III, eingesetzt wird.

7. Verfahren nach Ansprüchen 1-6, dadurch gekennzeichnet, daß die Temperatur 200 bis 380 °C beträgt.

8. Verfahren nach Ansprüchen 1-7, dadurch gekennzeichnet, daß die Temperatur 280 bis 360 °C beträgt.

9. Verfahren nach Ansprüchen 1-8, dadurch gekennzeichnet, daß der Umesterungsgrad mindestens 90 % beträgt.

10. Verfahren nach Ansprüchen 1-9, dadurch gekennzeichnet, daß der Umesterungsgrad mindestens 95 % beträgt.

## Claims

1. Process for the preparation of aromatic copolyphosphonates having average molecular weights $\bar{M}_n$ of from 5,000 to 200,000 and molar ratios of phosphonate groups/(carboxylate plus carbonate groups) of from 95 : 5 to 5 : 95, characterised in that a mixture of

I. aromatic polyesters and

II. aromatic polyphosphonate in the desired ratio and

III. organic solvents in a quantity of 2 to 95 % by weight,

based on the sum of components I + II + III, is extruded at temperatures from 150 to 420 °C until a degree of transesterification (determined by the ratio of the glass transition temperature peak according to differential thermoanalysis) of at least 80 % is obtained, the solvent being removed in the process of extrusion, optionally at a reduced pressure.

2. Process according to claim 1, characterised in that the average molecular weight $\bar{M}_n$ of the copolyphosphonates is from 10,000 to 150,000.

3. Process according to claims 1 and 2, characterised in that the molar ratio of phosphonate groups/(carboxylate plus carbonate groups) is from 80 : 20 to 10 : 90.

4. Process according to claims 1 to 3, characterised in that the molar ratio of phosphonate groups/(carboxylate plus carbonate groups) is from 65 : 35 to 10 : 90.

5. Process according to claims 1 to 4, characterised in that the organic solvent III is put into the process in a quantity of from 30 to 80 % by weight, based on the sum of components I + II + III.

6. Process according to claims 1 to 5, characterised in that the organic solvent III is put into the process in a quantity of from 60 to 75 % by weight, based on the sum of components I + II + III.

7. Process according to claims 1 to 6, characterised in that the temperature is from 200 to 380 °C.

8. Process according to claims 1 to 7, characterised in that the temperature is from 280 to 360 °C.

9. Process according to claims 1 to 8, characterised in that the degree of transesterification is at least 90 %.

10. Process according to claims 1 to 9, characterised in that the degree of transesterification is at least 95 %.

## Revendications

1. Procédé de préparation de copolyphosphonates aromatiques à des poids moléculaires moyens

$\bar{M}_n$ de 5 000 à 200 000 et des rapports molaires groupes phosphonate/(groupes carboxylate plus carbonate) de 95 : 5 à 5 : 95, caractérisé en ce que l'on extrude un mélange de

I. un polyester aromatique et

II. un polyphosphonate aromatique dans les proportions voulues et

III. un solvant organique en quantité de 2 à 95 % en poids par rapport à la somme des composants I + II + III, à des températures de 150 à 420 °C, jusqu'à un taux de transestérification (déterminé par le rapport des pics de température de transition vitreuse d'après l'analyse thermodifférentielle) d'au moins 80 %, en éliminant le solvant, éventuellement sous vide, au cours de l'extrusion.

2. Procédé selon la revendication 1, caractérisé en ce que le poids moléculaire moyen $\bar{M}_n$ des copolyphosphonates est de 10 000 à 150 000.

3. Procédé selon les revendications 1 et 2, caractérisé en ce que le rapport molaire groupes phosphonate/(groupes carboxylate plus carbonate) est de 80 : 20 à 10 : 90.

4. Procédé selon les revendications 1 à 3, caractérisé en ce que le rapport molaire groupes phosphonate/(groupes carboxylate plus carbonate) est de 65 : 35 à 10 : 90.

5. Procédé selon les revendications 1 à 4, caractérisé en ce que le solvant organique III est mis en œuvre en quantité de 30 à 80 % en poids, par rapport à la somme des composants I + II + III.

6. Procédé selon les revendications 1 à 5, caractérisé en ce que le solvant organique III est mis en œuvre en quantité de 60 à 75 % en poids par rapport à la somme des composants I + II + III.

7. Procédé selon les revendications 1 à 6, caractérisé en ce que la température est de 200 à 380 °C.

8. Procédé selon les revendications 1 à 7, caractérisé en ce que la température est de 280 à 360 °C.

9. Procédé selon les revendications 1 à 8, caractérisé en ce que le taux de transestérification est d'au moins 90 %.

10. Procédé selon les revendications 1 à 9, caractérisé en ce que le taux de transestérification est d'au moins 95 %.